# EUROPEAN PATENT APPLICATION

(11) **EP 2 698 289 A2**
(43) Date of publication of application: **19.02.2014**
(21) Application number: 13166668.7
(22) Date of filing: 06.05.2013
(51) Int. Cl.: B60R 25/08

(54) **Method for preventing theft of an electric vehicle and an electric vehicle applying the same**

(30) Priority: 17.08.2012 TW 101129977
(71) Applicant: Klever Mobility Inc., New Taipei City 236 (TW)
(72) Inventor: Ko, Kuang-Feng, 236 New Taipei City (TW); Jang, Bow-Yi, Taoyuan City, Tyoyuan County 330 (TW)
(74) Representative: Zimmermann, Tankred Klaus

(57) **Abstract**

A method for preventing theft of an electric vehicle (2) includes steps (a) and (b). In step (a), when a switch detector (22) detects that the state of a main switch (21) is an OFF state, and when a rotation detector (26) detects that a drive wheel (25) is rotating, a controller (28) is configured to count a time period of rotation of the drive wheel (25) . In step (b), the controller (28) is configured to enable a locking mechanism (27) for locking the drive wheel (25) from rotation when the time period counted by the controller (28) reaches a preset time period.

## Description

The present invention relates to a method for preventing theft of an electric vehicle and an electric vehicle applying the method.

In recent years, due to environmental protection becoming an important issue, people started replacing gasoline motor vehicles with electric vehicles.

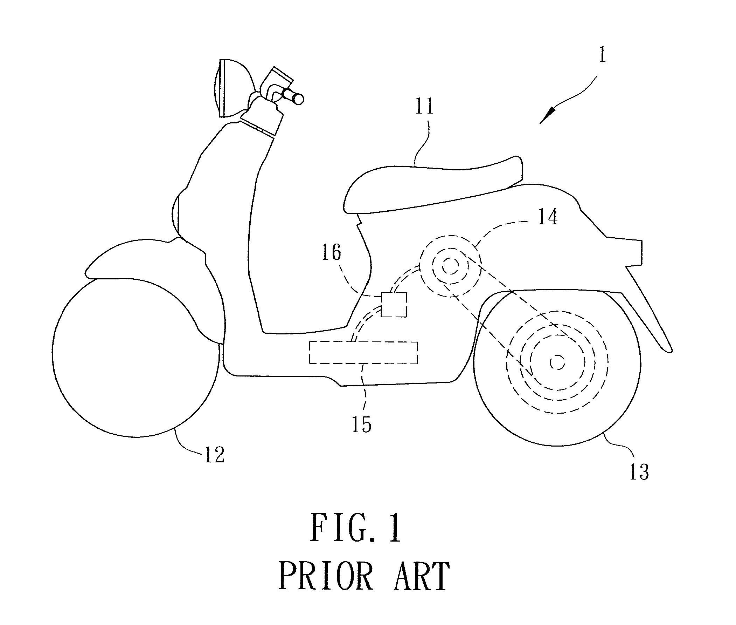

Referring to Figure 1, a conventional vehicle 1 includes a vehicle body 11, a front wheel 12 and a rear wheel 13 spacedly apart from each other and rotatably disposed on the vehicle body 11, a motor 14 for driving the rear wheel 13, a power supply 15 for providing the needed electric power to the motor 14, and a controller 16 electrically connected to the motor 14 and the power supply 15. The controller 16 controls the rotation speed of the motor 14 to control the movement speed of the electric vehicle 1.

However, theft is common for both electric vehicles and gasoline vehicles, and therefore the users of such vehicles often require appropriate locking devices to lock the parked vehicles in order to prevent theft of the vehicles.

Nevertheless, purchasing the locking devices requires extra expenditure and the locking devices may be intentionally damaged as they are mostly exposed on the exterior of the vehicles. Such locking devices also affect the vehicle aesthetically.

Therefore, an object of the present invention is to provide a method for preventing theft of an electric vehicle, and an electric vehicle applying the method.

According to the present invention, there is provided an electric vehicle including a main switch, a switch detector for detecting a switch state of the main switch, an electric power source controlled by the main switch, a motor for converting electricity from the electric power source into a mechanical power output, a drive wheel driven by the mechanical power output of the motor, a rotation detector for detecting rotation of the drive wheel, a locking mechanism operable to lock the drive wheel from rotation, and a controller coupled to the switch detector, the electric power source, the motor, the rotation detector and the locking mechanism.

The method for preventing theft of the electric vehicle comprises the steps of:
a) when the switch detector detects that the state of the main switch is an OFF state, and when the rotation detector detects that the drive wheel is rotating, configuring the controller to count a time period of rotation of the drive wheel; and
b) configuring the controller to enable the locking mechanism for locking the drive wheel from rotation when the time period counted by the controller reaches a preset time period.

Other features and advantages of the present invention will become apparent in the following detailed description of the preferred embodiments with reference to the accompanying drawings, of which:
Figure 1 is a schematic diagram of a conventional vehicle;
Figure 2 is a schematic block diagram of the first preferred embodiment of an electric vehicle according to the present invention;
Figure 3 is a flow chart of the method performed by the first preferred embodiment of an electric vehicle according to the present invention; and
Figure 4 is a schematic block diagram of the second preferred embodiment of an electric vehicle according to the present invention.

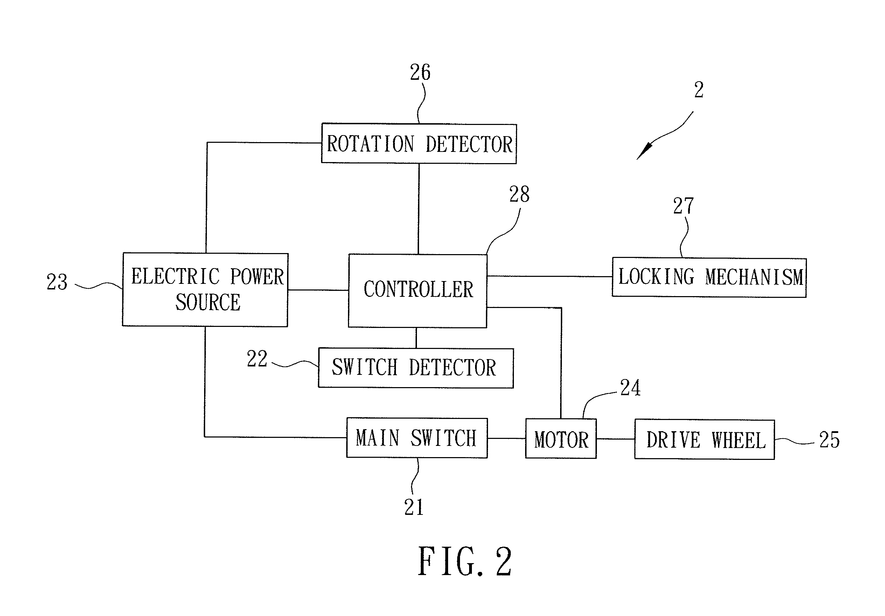

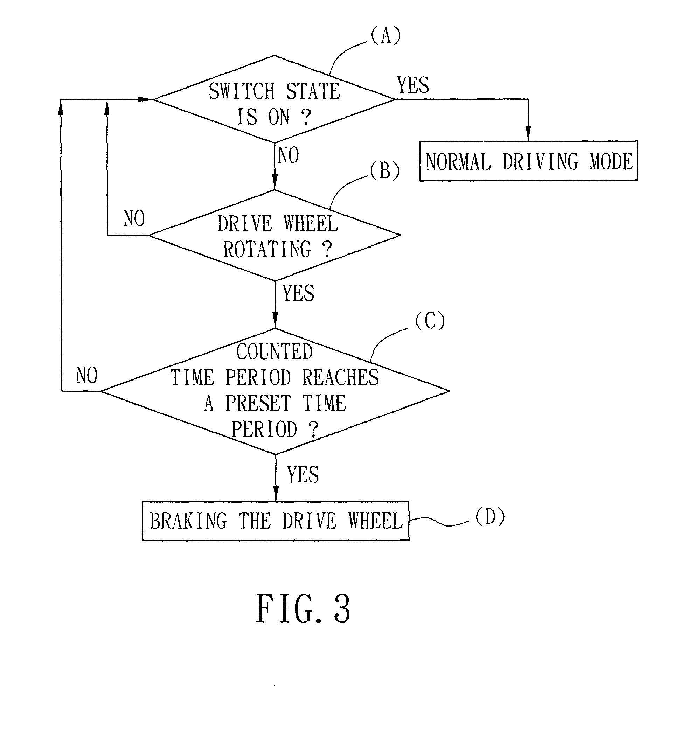

Referring to Figures 2 and 3, the first preferred embodiment of the method for preventing theft of an electric vehicle is applied to an electric vehicle 2. The electric vehicle 2 includes a main switch 21, a switch detector 22 for detecting a switch state of the main switch 21, an electric power source 23 controlled by the main switch 21, a motor 24 for converting electricity from the electric power source 23 into a mechanical power output, a drive wheel 25 driven by the mechanical power output of the motor 24, a rotation detector 26 for detecting rotation of the drive wheel 25, a locking mechanism 27 operable to lock the drive wheel 25 from rotation, and a controller 28 (such as a central processing unit) electrically coupled to the switch detector 22, the electric power source 23, the motor 24, the rotation detector 26 and the locking mechanism 27. The controller 28 also stores a program for implementing the method for preventing theft of an electric vehicle.

In this preferred embodiment, the electric power source 23 is a battery, the drive wheel 25 is a rear wheel of the electric vehicle 2, the rotation detector 26 is a Hall sensor that the motor 24 uses for rotation detection, and the locking mechanism 27 includes a plurality of power transistors electrically connected to the motor 24 and the electric power source 23.

When external forces are applied on the drive wheel 25, the motor 24 can be reversely driven, causing the motor 24 to produce back electromotive force. Therefore, the rotation detector 26 can also be a voltage comparator or a voltage switch that detects the back electromotive force produced by the rotation in the motor 24. The locking mechanism 27 can also be a brake that brakes the drive wheel 25.

The method for preventing theft of an electric vehicle includes step (A) : detecting the state of the main switch 21. If the main switch 21 is in an OFF state, the controller 28 configures the electric power source 23 to enter a power saving mode, and the controller 28 performs step (B). In the power saving mode, the electric power source 23 only provides power to the rotation detector 26 and the controller 28, effectively minimizing power consumption. If the main switch 21 is in an ON state, it represents that the electric vehicle 2 is actuated by a vehicle owner using a vehicle key, and is not being stolen. Therefore, the electric vehicle 2 enters a normal driving mode, and the motor 24 operates using the electricity supplied from the electric power source 23.

Step (B) utilizes the rotation detector 26 to detect the rotation of the drive wheel 25. If the drive wheel 25 rotates but the main switch 21 is in an OFF state, the electric vehicle 2 is either being moved or stolen. At this moment, the rotation detector 26 sends a signal to wake up the controller 28 in the power saving mode and step (C) is then performed. If the drive wheel 25 is not rotating, then the electric vehicle 2 remains in the power saving mode and therefore step (A) is performed for the switch detector 22 to continuously detect for actuation of the main switch 21.

Step (C) configures the controller 28 to count if a time period of the rotation of the drive wheel 25 reaches a preset time period. If the counted time period reaches the preset time period, the electric vehicle 2 is moved a certain distance while the main switch 21 is not actuated. Possibly, the electric vehicle 2 is being stolen, and step (D) is performed next. If the counted time period does not reach the preset time period, the drive wheel 25 of the electric vehicle 2 did not rotate much. Possibly, the electric vehicle 2 is only moved a small distance and not being stolen, and therefore step (A) is performed next. In this preferred embodiment, the preset time period is one minute but should not be limited thereto.

In this preferred embodiment, the controller 28 counts the time period of rotation of the drive wheel 25 from the duration of the detected signal from the rotation detector 26.

Step (D) configures the controller 28 to control the locking mechanism 27 to brake the drive wheel 25, preventing the thief from pushing the electric vehicle 2 further. In this preferred embodiment, the controller 28 turns on two power transistors to brake the motor 24 in order to brake the drive wheel 25.

In this preferred embodiment, the method for preventing theft of an electric vehicle 2 configures, in step (B), the rotation detector 26 to detect the rotation of the drive wheel 25, configures, in step (C), the controller 28 to determine whether the duration of the detected signal from the rotation detector 26 reaches the preset time period, and configures, in step (D), the controller 28 to control the locking mechanism 27 to brake the motor 24 in order to brake the drive wheel 25. This method provides an internal anti-theft mechanism which is difficult for a thief to tamper with.

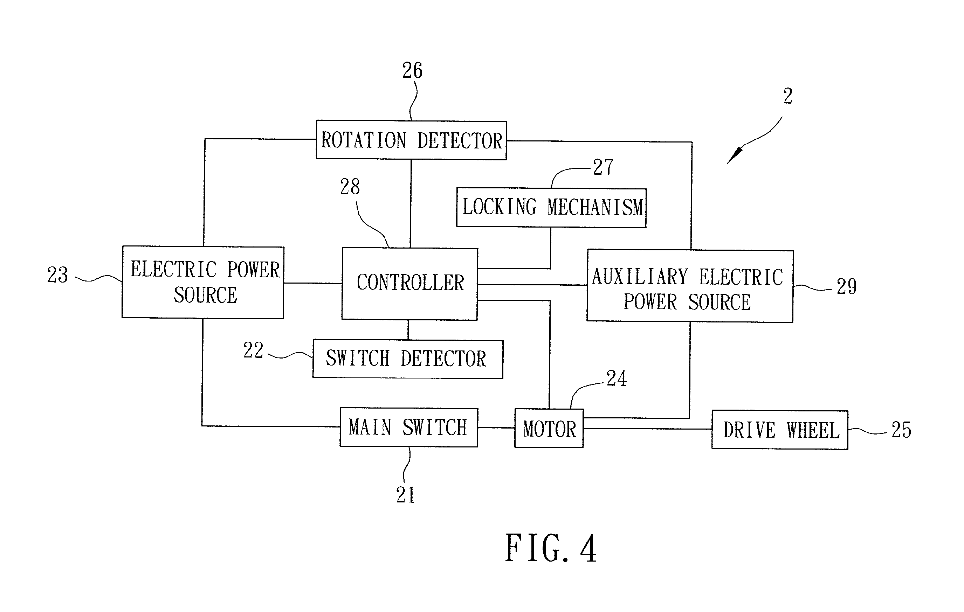

Referring to Figure 4, a second preferred embodiment of the method of this invention is similar to the first preferred embodiment, with the differences being: the electric vehicle 2 further includes an auxiliary electric power source 29 electrically connected to the motor 24, the controller 28, and the rotation detector 26. The auxiliary electric power source 29 is charged by the back electromotive force of the motor 24, and provides electricity to the controller 28 and the rotation detector 26 when the electric power source 23 is unable to provide electricity.

Therefore, in the event that the electric power source 23 is depleted or stolen, the auxiliary electric power source 29 provides enough power for the controller 28 and the rotation detector 26 to maintain the anti-theft operation of the electric vehicle 2.

In summary, the method for preventing theft of an electric vehicle 2 configures, in step (B), the rotation detector 26 to detect the rotation of the drive wheel 25, configures, in step (C), the controller 28 to determine whether the duration of the detected signal from the rotation detector 26 reaches the preset time period, and configures, in step (D), the controller 28 to control the locking mechanism 27 to brake the motor 24 in order to brake the drive wheel 25. This method provides an internal anti-theft mechanism which is difficult for a thief to tamper with. Moreover, the components used in such electric vehicle 2 are common in any electric vehicle, and therefore the manufacturing cost can be effectively lowered.

## Claims

1. A method for preventing theft of an electric vehicle (2), the electric vehicle (2) including a main switch (21), a switch detector (22) for detecting a switch state of the main switch (21), an electric power source (23) controlled by the main switch (21), a motor (24) for converting electricity from the electric power source (23) into a mechanical power output, a drive wheel (25) driven by the mechanical power output of the motor (24), a rotation detector (26) for detecting rotation of the drive wheel (25), a locking mechanism (27) operable to lock the drive wheel (25) from rotation, and a controller (28) coupled to the switch detector (22), the electric power source (23), the motor (24), the rotation detector (26) and the locking mechanism (27), the method **characterized by**:
a) when the switch detector (22) detects that the state of the main switch (21) is an OFF state, and when the rotation detector (26) detects that the drive wheel (25) is rotating, configuring the controller (28) to count a time period of rotation of the drive wheel (25); and
b) configuring the controller (28) to enable the locking mechanism (27) for locking the drive wheel (25) from rotation when the time period counted by the controller (28) reaches a preset time period.

2. The method as claimed in Claim 1, **characterized in that** the rotation detector (26) detects rotation of the drive wheel (25) by detecting rotation of the motor (24).

3. The method as claimed in Claim 1, **characterized in that** the rotation detector (26) detects rotation of the drive wheel (25) by detecting back electromotive force generated by the motor (24).

4. The method as claimed in any one of Claims 1 to 3, **characterized in that** the locking mechanism (27) is operable to lock rotation of the drive wheel (25) by locking rotation of the motor (24).

5. The method as claimed in any one of Claims 1 to 3, **characterized in that** the locking mechanism (27) is operable to lock rotation of the drive wheel (25) by applying a braking force thereto.

6. An electric vehicle (2) comprising:
a main switch (21);
a switch detector (22) for detecting a switch state of said main switch (21);
an electric power source (23) controlled by said main switch (21);
a motor (24) for converting electricity from said electric power source (23) into a mechanical power output;
a drive wheel (25) driven by said mechanical power output of said motor (24);
a rotation detector (26) for detecting rotation of said drive wheel (25);
a locking mechanism (27) operable to lock said drive wheel (25) from rotation; and
a controller (28) coupled to said switch detector (22), said electric power source (23), said motor (24), said rotation detector (26) and said locking mechanism (27);
**characterized in that** when said switch detector (22) detects that said state of said main switch (21) is an OFF state, and when said rotation detector (26) detects that said drive wheel (25) is rotating, said controller (28) is configured to count a time period of rotation of said drive wheel (25);
said controller (28) being further configured to enable said locking mechanism (27) for locking said drive wheel (25) from rotation when said time period counted by said controller (28) reaches a preset time period.

7. The electric vehicle (2) as claimed in Claim 6, **characterized in that** said rotation detector (26) includes a Hall sensor for detecting rotation of said drive wheel (25) by detecting rotation of said motor (24).

8. The electric vehicle (2) as claimed in Claim 6, **characterized in that** said rotation detector (26) includes one of a voltage comparator and a voltage switch for detecting rotation of said drive wheel (25) by detecting back electromotive force generated by said motor (24).

9. The electric vehicle (2) as claimed in any one of Claims 6 to 8, **characterized in that** said locking mechanism (27) is operable to lock rotation of said drive wheel (25) by locking rotation of said motor (24).

10. The electric vehicle (2) as claimed in any one of Claims 6 to 8, **characterized in that** said locking mechanism (27) is operable to lock rotation of said drive wheel (25) by applying a braking force thereto.

11. The electric vehicle (2) as claimed in any one of claims 6 to 10, further **characterized by** an auxiliary electric power source (29) coupled to said motor (24), said controller (28) and said rotation detector (26), and operable to provide electricity to said controller (28) and said rotation detector (26) using back electromotive force generated by said motor (24).
